# EUROPEAN PATENT SPECIFICATION

(11) **EP 1 077 337 B1**
(45) Date of publication and mention of the grant of the patent: **15.09.2004**
(21) Application number: 99125364.2
(22) Date of filing: 20.12.1999
(51) Int. Cl.: F16H 59/10

(54) **Gear selection device in an automatic transmission for motor vehicles**
Gangwählvorrichtung in einem Automatikgetriebe für ein Kraftfahrzeug
Dispositif de sélection de vitesse dans une transmission d'un véhicule automobile

(30) Priority: 18.08.1999 IT TO990714
(43) Date of publication of application: 21.02.2001
(73) Proprietor: FIAT AUTO S.p.A., 10135 Torino (IT)
(72) Inventor: Malara, Nicola, 20095 Cusano Milanino (MI) (IT); Moscatelli, Saverio, 20151 Milano (IT)
(74) Representative: Di Francesco, Gianni

(56) References cited:
- EP-A- 0 540 112
- US-A- 1 748 041
- US-A- 3 939 937
- US-A- 4 892 014
- US-A- 5 919 112

## Description

This invention relates to an electronic device for gear selection in an automatic transmission for motor vehicles. Italian patent N°1251752 submitted by the same requesting party describes a device for gear selection in an automatic transmission in motor vehicles, including various digital sensors designed to indicate the position of the rotation angle of a gear selection shaft, emerging from said automatic transmission, and rotatable for insertion of various gears by way of a stepping motor with two-way movement possible. The digital sensors and the stepping motor are electrically connected to a digital control and command electronic unit designed to process coded electrical signals emitted by the digital sensors when the angle position of the selection shaft varies. This system also comprises two electrical actuators designed to control the step by step or continuous current motor, by at least one step at a time, with rotation in one of two directions. This device also makes it possible to control a change in gear in the park position, automatically after the motor start-up key is removed from the appropriate position. In the event of device default it is possible to select the park position and other gears. The electrical actuators are ideally connected to an electronic processing unit that determines when the automatic transmission is activated based on signals received and received according to a predefined sequence and / or ratio of related positions of sensors located on the motor vehicle.

On the other hand, US Pat. N. 4,892,014, which shows all features of the preamble of claim 1, discloses an electronic controller for automatic transmissions, in which a microprocessor controlled automatic transmission range shift selector positions the range shift valve in accordance with a shift request by an electric motor; a feedback transducer provides valve position information for motor control purposes and vehicle conditions transducers, including a door switch, a seat switch and vehicle speed and RPM sensors, provide inputs to the microprocessor, which is programmed to determine appropriate shifts to prevent requested range shifts in some cases and automatically initiating shifts into park in other cases.

However, some cases it may be more convenient for the device to allow for the automatic selection of the park position even when the motor is on, meaning when the key is inserted and turned in the on position.

The object of the present invention is to carry out a device for gear selection in an automatic transmission system, that also includes the possibility of varying gear position automatically when the motor vehicle is still and the motor still in operation.

The structural and operational characteristics and the advantages of a gear selection device according to the present invention will be more apparent from the description given hereinafter by way of nonlimiting example with reference to the only accompanying schematic drawing, showing the schematic embodiment of the device according to the invention associated with an automatic transmission, shown partly in perspective.

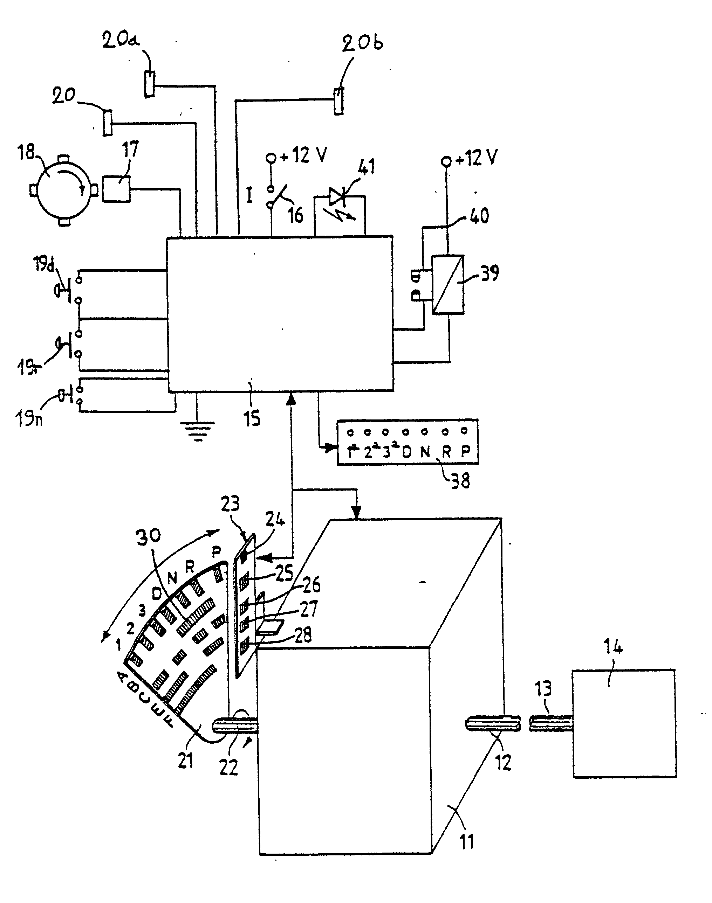

Reference being made to the figure, which shows a schematic embodiment of an electronic device for gear selection in an automatic speed transmission for motor vehicles according to the present invention, including on one end, a stepping motor (11) mechanically connected via shaft one (12) and levers (not illustrated) to gear selection shaft two (13) located in an automatic transmission (14).

The electronic device comprises essentially an electronic processing unit 15, such as an electronic logic control and power centre, connected on one side to a switching and powering device, indicated schematically as a switch 16. The electronic unit 15 is also connected to a speed measuring device 17 consisting of a tachometer sensor which measures the vehicle running speed by the rotation of shaft 18, such as a vehicle wheel axle for example.

The electronic unit 15 is also connected to and operationally controlled by three electrical actuators 19d, 19n, 19r, usually consisting of pushbuttons or switches, which cause the first stepping motor shaft 12 and the second gear selection shaft 13 to rotate in one direction or the other, with consequent successive gear shifts (drive, neutral, reverse). The electronic unit is also connected to a tachometer sensor, which provides a signal to sensor 20a located on the break pedal when a predefined level is reached. Said sensor transmits an electrical signal when the pedal is pressed, even slightly, to sensor 20b, located on the driver's door, and aimed at transmitting a signal indicating if the vehicle door is open or closed.

A plurality of permanent magnets are mounted on the shaft 12 of the stepping motor connected to gear selection shaft 13, and a plurality of magnetic sensors are mounted on the casing of the stepping motor 11.

The gear selection shaft 13 can undergo predetermined rotations in the sense that it can assume only a finite number of positions, with each of which a determined engaged gear of the automatic transmission 14 corresponds.

The figure is a partly perspective view of two supports of non-magnetic material such as aluminium, these being a first support 21 fixed to an extension 22 of the shaft of the stepping motor 11, and second support 23 to be fixed on the casing of the stepping motor 11. In the illustrated embodiment, the plurality of permanent magnets fixed to the rotatable support 21 consists of five series of permanent magnets indicated respectively by A, B, C, E, F and the plurality of magnetic sensors fixed to the casing of the stepping motor 11 comprising five sensors indicated respectively by 24, 25, 26, 27 and 28, they being connected to the electronic unit 15. The body of the first support 21 is shaped as an isosceles trapezium or a circumferential sector and carries the series of permanent magnets along concentric circumferential arcs of decreasing diameter. At its top, for example within radial recesses in the peripheral circumference 29, the support 21 contains the first series A of permanent magnets corresponding to the various gears or positions assumable by the automatic transmission.

In this respect, it is important to note that the Hall effect digital magnetic sensors, as used for example in the present invention, have the property of electrically generating a logic « 0 » whenever they are exposed to a magnetic field, and of generating a logic « 1 » in the opposite case.

In this manner, a doubly unambiguous correspondence between the engaged gears and the corresponding coded electrical signals generated by the sensors is obtained, such that these signals can be unambiguously identified and used by any digital electronic circuit or electronic unit.

A display unit 38 and a relay 39 with normally open contacts (closed when the ignition key is inserted) is connected into the engine power line 40 are connected to the electronic unit 15.

The electronic device for gear selection in an automatic transmission for motor vehicles according to the present invention operates in the following manner.

On inserting the ignition key, the vehicle engine can be started only if in the park or neutral position, i.e. when the sensor 24 faces the permanent magnet in position P or the permanent magnet in position N. By virtue of its predefined logic, the electronic unit 15 allows the engine to be started when the sensors and magnets are in these relative positions.

If the electrical pushbutton 19r is now pushed once, the reverse position is achieved as the electronic unit 15 feeds a signal for rotating the stepping motor 11 through one step. The required operation of the automatic transmission 14 is therefore achieved, and the position attained is confirmed by the fact of the magnet R being in a position corresponding with the sensor 24.

It should be noted that as in the case of all automatic transmission vehicles the brake governs the vehicle movement in the normal manner.

If it is required to put the vehicle into gear from the park position while keeping the brake pressed, the pushbutton 19d has to be pressed (sufficient to attain first gear). This arrangement is achieved by the stepping motor 11 undergoing the required number of steps under the control of the electronic unit 15. If it is required to put the vehicle out of gear the pushbutton 19n will have to be pressed, at a speed of less than 5 km/h.

The second permanent magnet series B, consisting in the illustrated example of the magnet 30, acts when in the automatic drive position a safety device should be the signal obtained by the tachometer sensor 17 to indicate that a vehicle speed exceeding a first level, for example 5km/h, or exceeding a second level, for example 180 km/h. As the magnet D faces the sensor 24, this magnet will face the sensor 25, to actuate a logic safety device. In this respect it prevents gear shift into the neutral, reverse or park position of the automatic transmission, hence preventing over-running.

Advantageously in a device according to the present invention when the ignition key is removed the electronic unit 15 automatically returns the automatic transmission to the park position. In this respect, the engine power line 40 contains the relay 39 which remains closed until the automatic transmission reaches the park position. Only at this point do the contacts of the relay 39 open to cut power to the electronic unit or control centre 15. Hence even if the driver forgets to shift the automatic transmission into the park position on vehicle stoppage, the electronic unit 15 does this completely automatically. Advantageously and for further user safety a device according to the present invention is also provided with a signal from sensor 20b, actuated when the driver's door is opened, electronic unit 15 shifts the automatic transmission into the park position automatically. This is only possible of course when the tachometer 20 is not active as the motor has not exceeded the predefined number of revolutions, comprised between 600 and 800 rpm (g/1' revolutions), and the speed sensor of vehicle 17 indicated that the speed is lower than 5 km/h. This function of the electronic unit allows the user to leave the vehicle momentarily, with the engine running, without it moving in any way.

Advantageously in a transmission according to the present invention when entering the vehicle with the engine running and the transmission in the park position the driver can activate vehicle movement simply by stepping on the break pedal, whereby the electronic unit shifts the automatic transmission into the drive position when the impulse signal from sensor 20a is received. Vehicle movement can be achieved simply by accelerating by pressing the pedal and exceeding the predefined level.

It is apparent that if the motor gear is in the park position the gear cannot be shifted into the reverse and neutral gears, even by accidentally pressing pushbuttons 19r and 19n. Only the driver can transmit the command to the electronic unit 11 by pressing the break pedal, and reestablish the operation of the other pushbuttons.

## Claims

1. Electronic device for gear selection in an automatic transmission for motor vehicles, comprising a plurality of digital sensors (24 - 28) for determining the angular position of rotation of a gear selection shaft (13) emerging from said automatic transmission and rotatable to engage the various gears by a stepping motor (11) operable in both directions, said digital sensors and said stepping motor (11) being electrically connected to a digital electronic operating and control unit (15) which can process coded electrical signals emitted by said plurality of digital sensors to vary the angular position of said selection shaft (13), from a position in which the transmission (14) is in forward gear to a position in which it is in neutral gear, reverse gear or park, said electronic unit being operated by signals transmitted by a series of sensors (16, 17) located on the vehicle, said sensors (16, 17) including a tachometer sensor for the number of motor revolutions (20), a sensor in the position of the brake pedal (20a), and a sensor (20b) in the position of the driver's door, and said electronic unit (15) being provided for activating the selection shaft (13) as a function of the signals detected by said sensors (16, 17), **characterised in that** said electronic unit (15) activates the selection shaft (13) into a position in which the transmission (14) is in park position when, with the vehicle motor running, said door position sensor (20b) indicates that said door is open and said tachometer sensor indicates that the number of motor revolutions is below a redefined level.

2. Device according to claim 1, **characterised in that** said electronic unit (15) activates the selection shaft (13) automatically into the position whereby the gear is in the forward or drive position, when, with the vehicle motor running, the motor turn sensor (20) indicates a number of motor revolutions exceeding a predefined level, with the sensor in the position of the brake pedal (20a) indicating that the pedal is not in the rest position, and the door position sensor (20b) indicating that the door is closed.

3. Device according to claim 1, **characterised by** the fact that said electronic unit (15) can be controlled manually via pushbuttons (19d, 19n and 19r), to move the selection shaft (13) from a position in which the transmission (14) is in forward or drive gear to a position in which said transmission (14) is in neutral or reverse gear.

## Patentansprüche

1. Elektronische Gangwählvorrichtung in einem Automatikgetriebe für Kraftfahrzeuge, umfassend mehrere digitale Sensoren (24 bis 28), um die Winkelposition der Umdrehung einer Gangwählwelle (13) zu bestimmen, welche aus dem Automatikgetriebe hervortritt und durch einen in beide Richtungen betätigbaren Schrittmotor (11) drehbar ist, um die verschiedenen Gänge einzulegen, wobei die digitalen Sensoren und der Schrittmotor (11) elektrisch mit einer digitalen elektronischen Betriebs- und Steuereinheit (15) verbunden sind, die codierte elektrische Signale, welche durch die mehreren Sensoren ausgegeben werden, verarbeiten kann, um die Winkelposition der Wählwelle (13) von einer Position, in der sich das Getriebe (14) in einem Vorwärtsgang befindet, zu einer Position, in der es sich im neutralen Gang, im Rückwärtsgang oder in der Parkstellung befindet, zu verändern, wobei die elektronische Einheit durch Signale betrieben wird, die durch eine Serie von am Fahrzeug gelegenen Sensoren (16, 17) einschließlich eines Tachometersensors (20) für die Anzahl der Motorumdrehungen, eines Sensors (20a) an der Stelle des Bremspedals und eines Sensors (20b) an der Stelle der Fahrertür gesendet werden, und die elektronische Einheit (15) bereitgestellt ist, um die Wählerwelle (13) als eine Funktion der durch die Sensoren (16, 17) festgestellten Signale zu aktivieren,
**dadurch gekennzeichnet, daß** die elektronische Einheit (15) die Wählerwelle (13) in eine Stellung aktiviert, in der sich das Getriebe (14) in der Parkstellung befindet, wenn bei laufendem Motor durch den Türstellungssensor (20b) angegeben wird, daß die Tür offen ist, und durch den Tachometersensor angeben wird, daß die Anzahl der Motorumdrehungen unter einem vordefinierten Maß liegt.

2. Vorrichtung nach Anspruch 1, **dadurch gekennzeichnet, daß** die elektronische Einheit (15) die Wählerwelle (13) automatisch in die Stellung aktiviert, wodurch sich der Gang in der Vorwärts- oder Fahrtstellung befindet, wenn bei laufendem Motor durch den Motorumdrehungssensor (20) eine Anzahl von Motorumdrehungen angeben wird, die ein vordefiniertes Maß übersteigt, durch den Sensor (20a) an der Stelle des Bremspedals angegeben wird, daß sich das Pedal nicht in der Ruhestellung befindet, und durch den Sensor (20b) an der Stelle der Tür angegeben wird, daß die Tür geschlossen ist.

3. Vorrichtung nach Anspruch 1, **gekennzeichnet durch** den Umstand, daß die elektronische Einheit (15) über Druckknöpfe (19d, 19n und 19r) manuell gesteuert werden kann, um die Wählerwelle (13) von einer Stellung, in der sich das Getriebe (14) im Vorwärts- oder Fahrtgang befindet, in eine Stellung zu bewegen, in der sich das Getriebe (14) im neutralen oder Rückwärtsgang befindet.

## Revendications

1. Dispositif électronique de sélection de vitesse dans une transmission automatique de véhicule automobile, comprenant une pluralité de capteurs (24 à 28) numériques pour déterminer la position angulaire en rotation d'un arbre (13) de sélection de vitesses sortant de la transmission automatique et pouvant être entraîné en rotation, pour passer les diverses vitesses, par un moteur (11) pas-à-pas pouvant tourner dans les deux sens, les capteurs numériques et le moteur (11) pas-à-pas étant reliés électriquement à une unité (15) électronique numérique de fonctionnement et de commande qui peut traiter des signaux électriques codés émis par la pluralité des capteurs numériques pour modifier la position angulaire de l'arbre (13) de sélection, d'une position dans laquelle la transmission (14) est en marche avant à une position dans laquelle elle est au point mort, en marche arrière ou en position de stationnement, l'unité électronique fonctionnant par des signaux transmis par une série de capteurs (16, 17) placés sur le véhicule, les capteurs (16, 17) comprenant un capteur tachymétrique du nombre de tours (20) du moteur, un capteur de la position de la pédale (20a) de frein et un capteur (20b) de la position de la portière du conducteur et l'unité (15) électronique étant prévue pour activer l'arbre (13) de sélection en fonction des signaux détectés par les capteurs (16, 17), **caractérisé en ce que** l'unité (15) électronique met l'arbre (13) de sélection en une position dans laquelle la transmission (14) est en une position de stationnement lorsque, alors que le moteur du véhicule tourne, le capteur (20b) de position de la portière indique que la portière est ouverte et le capteur tachymétrique indique que le nombre de tours du moteur est inférieur à un niveau défini à l'avance.

2. Dispositif suivant la revendication 1, **caractérisé en ce que** l'unité (15) électronique met l'arbre (13) de sélection automatiquement en la position dans laquelle la vitesse est en la position de marche avant ou en position d'entraînement lorsque, alors que le moteur du véhicule tourne, le capteur (20) de tours du moteur indique un nombre de tours du moteur dépassant un niveau défini à l'avance, alors que le capteur de la position de la pédale (20a) de frein indique que la pédale n'est pas en la position de repos et alors que le capteur (20b) de position de la portière indique que la portière est fermée.

3. Dispositif suivant la revendication 1, **caractérisé par le fait que** l'unité (15) électronique peut être commandée manuellement par des boutons poussoirs (19d, 19n et 19r) pour faire passer l'arbre (13) de sélection d'une position dans laquelle la transmission est en une position de marche avant ou d'entraînement à une position dans laquelle la transmission (14) est au point mort ou en marche arrière.
